# EUROPEAN PATENT APPLICATION

(11) **EP 4 068 423 A1**
(43) Date of publication of application: **05.10.2022**
(21) Application number: 21198592.4
(22) Date of filing: 23.09.2021
(51) Int. Cl.: H01M 4/136, H01M 4/36, H01M 4/58, H01M 4/62, H01M 10/0525, H01M 4/02

(54) **POSITIVE ELECTRODE MATERIAL FOR LITHIUM ION SECONDARY BATTERY, POSITIVE ELECTRODE FOR LITHIUM ION SECONDARY BATTERY, AND LITHIUM ION SECONDARY BATTERY**

(30) Priority: 31.03.2021 JP 2021061455
(71) Applicant: Sumitomo Metal Mining Co., Ltd., Tokyo 105-8716 (JP)
(72) Inventor: OSHITARI, Satoru, Tokyo, 102-8465 (JP); NOZOE, Tsutomu, Tokyo, 102-8465 (JP)
(74) Representative: Cabinet Laurent & Charras

(57) **Abstract**

A positive electrode material for a lithium ion secondary battery containing an olivine-type phosphate-based compound represented by General Formula LiₓA_{y}D_{z}PO₄ (where A is at least one selected from the group consisting of Co, Mn, Ni, Fe, Cu, and Cr, D is at least one selected from the group consisting of Mg, Ca, Sr, Ba, Ti, Zn, V, B, Al, Ga, In, Si, Ge, Sc, and Y, 0.9 < x < 1.1, 0 < y ≤ 1.0, 0 ≤ z < 1.0, 0.9 < y + z < 1.1) and carbon, wherein the positive electrode material includes an agglomerate wherein primary particles which consist of the olivine-type phosphate-based compound agglomerate, and the agglomerate is a dense agglomerate, wherein a volume density of the agglomerate is 70% by volume or more and 85% by volume or less of a volume density of a solid body which has the same external appearance as the agglomerate.

## Description

### BACKGROUND OF THE INVENTION

### Field of the Invention

The present invention relates to a positive electrode material for a lithium ion secondary battery, a positive electrode for a lithium ion secondary battery, and a lithium ion secondary battery.

### Description of Related Art

Lithium ion secondary batteries have a higher energy density and a higher power density than lead batteries and nickel metal hydride rechargeable batteries and are used in a variety of uses such as small-sized electronic devices such as smartphones and the like, domestic backup power supplies, electric tools, and the like. In addition, attempts are underway to put high-capacity lithium ion secondary batteries into practical use for recyclable energy storage such as photovoltaic power generation, wind power generation, and the like.

Lithium ion secondary batteries usually include a positive electrode, a negative electrode, an electrolyte, and a separator. As a positive electrode material constituting the positive electrode, a positive electrode active material made of a lithium-containing metal oxide having properties capable of reversibly intercalating and deintercalating lithium ions such as lithium cobalt oxide (LiCoO₂), lithium manganate (LiMn₂O₄), or lithium iron phosphate (LiFePO₄) is used. For lithium ion secondary batteries, studies are underway in order for improvement from a variety of viewpoints such as an increase in the capacities of batteries, the extension of service lives, improvement in safety, cost reduction, and the like (for example, refer to Japanese Laid-open Patent Publication No. 10-144320) .

### SUMMARY OF THE INVENTION

In a case where an olivine-type phosphate-based compound is used as a positive electrode active material, an attempt has been made in order to obtain favorable characteristics by, for example, miniaturizing primary particles to a specific surface area of approximately 5 m²/g to 35 m²/g and, furthermore, coating the primary particles with carbon. However, when the primary particles are miniaturized as described above, voids among the primary particle increase, and the tap density and the carbon coat density decrease. As a result, the electron conductivity of a positive electrode containing the olivine-type phosphate-based compound decreases, and there have been cases where the energy density per unit volume or charge and discharge capacity of a lithium ion secondary battery including the positive electrode decreases.

The present invention has been made in view of the above-described circumstances, and an object of the present invention is to provide a positive electrode material for a lithium ion secondary battery and a positive electrode for a lithium ion secondary battery from which a lithium ion secondary battery that is excellent in terms of the energy density per unit volume and the charge and discharge capacity can be obtained and a lithium ion secondary battery including this positive electrode for a lithium ion secondary battery.

As a result of intensive studies to solve the above-described problem, the present inventors found that a positive electrode material for a lithium ion secondary battery becomes excellent in terms of the energy density per unit volume and the charge and discharge capacity by containing an olivine-type phosphate-based compound and carbon and adjusting the volume density of agglomerates formed by the agglomeration of the primary particles of the olivine-type phosphate-based compound. The present invention was completed based on such a finding.

The present invention has the following aspects.

[1] A positive electrode material for a lithium ion secondary battery containing an olivine-type phosphate-based compound represented by General Formula LiₓA_{y}D_{z}PO₄ (where A is at least one selected from the group consisting of Co, Mn, Ni, Fe, Cu, and Cr, D is at least one selected from the group consisting of Mg, Ca, Sr, Ba, Ti, Zn, V, B, Al, Ga, In, Si, Ge, Sc, and Y, 0.9 < x < 1.1, 0 < y ≤ 1.0, 0 ≤ z < 1.0, 0.9 < y + z < 1.1) and carbon, in which the positive electrode material includes an agglomerate wherein primary particles which consist of the olivine-type phosphate-based compound agglomerate, the agglomerate is a dense agglomerate, wherein a volume density of the agglomerate is 70% by volume or more and 85% by volume or less of a solid body which has the same external appearance as the agglomerate.

[2] The positive electrode material for a lithium ion secondary battery according to [1], in which a carbon amount of (c) thereof is 0.7% by mass or more and 3.0% by mass or less, a specific surface area (a) thereof is 5 m²/g or more and 35 m²/g or less, and a value (c/a) obtained by dividing the carbon amount (c) by the specific surface area (a) is 0.08 or more and 0.20 or less.

[3] The positive electrode material for a lithium ion secondary battery according to [1] or [2], in which a tap density thereof is 1.61 g/cm³ or more and 1.86 g/cm³ or less.

[4] A positive electrode for a lithium ion secondary battery including an electrode current collector and a positive electrode mixture layer formed on the electrode current collector, in which the positive electrode mixture layer contains the positive electrode material for a lithium ion secondary battery according to any one of [1] to [3].

[5] A lithium ion secondary battery having a positive electrode, a negative electrode, and a non-aqueous electrolyte, in which the positive electrode for a lithium ion secondary battery according to [4] is included as the positive electrode.

According to the present invention, it is possible to provide a positive electrode material for a lithium ion secondary battery and a positive electrode for a lithium ion secondary battery from which a lithium ion secondary battery that is excellent in terms of the energy density per unit volume and the charge and discharge capacity can be obtained and a lithium ion secondary battery including this positive electrode for a lithium ion secondary battery.

### BRIEF DESCRIPTION OF THE DRAWINGS

FIG. 1 is a transmission electron microscope photograph of a positive electrode material for a lithium ion secondary battery in Example 1.
FIG. 2 is a transmission electron microscope photograph of a positive electrode material for a lithium ion secondary battery in Comparative Example 2.

### DETAILED DESCRIPTION OF THE INVENTION

An embodiment of a positive electrode material for a lithium ion secondary battery, a positive electrode for a lithium ion secondary battery, and a lithium ion secondary battery of the present invention will be described.

The present embodiment is simply a specific description for better understanding of the gist of the invention and does not limit the present invention unless particularly otherwise specified.

### Positive electrode material for lithium ion secondary battery

A positive electrode material for a lithium ion secondary battery of the present embodiment (hereinafter, simply referred to as "positive electrode material") contains an olivine-type phosphate-based compound represented by General Formula LiₓA_{y}D_{z}PO₄ and carbon, the primary particles of the olivine-type phosphate-based compound agglomerate to form agglomerates, and the agglomerate is a dense agglomerate that has a volume density of 70% by volume or more and 85% by volume or less as compared with the case of being made solid.

In the olivine-type phosphate-based compound, from the viewpoint of developing a high charge and discharge capacity, some or all of the primary particles or the agglomerates (secondary particles) formed by the agglomeration of the primary particle are each preferably covered with a carbonaceous film containing carbon.

It is conceivable that the amount of the olivine-type phosphate-based compound filled per volume of the electrode is improved by improving the volume density of the agglomerate and adjusting the agglomerates to be dense. That is, the volume density of the agglomerate in the present embodiment is set to 70% by volume or more and 85% by volume or less of the agglomerate as compared with the case of being made solid, which makes it possible to improve the energy density per unit volume of lithium ion secondary batteries.

In the agglomerate, the volume density is preferably 71% by volume or more and 84% by volume or less and more preferably 73% by volume or more and 82% by volume or less. When the volume density is less than 70% by volume, a high electrode density cannot be obtained, and the energy density per unit volume decreases. When the volume density exceeds 85% by volume, since it is difficult for electrolytes to permeate into the agglomerate, a sufficient discharge capacity cannot be obtained, and the energy density per unit volume decreases.

### Olivine-type phosphate-based compound (positive electrode active material)

The olivine-type phosphate-based compound that is used in the present embodiment is a compound represented by General Formula LiₓA_{y}D_{z}PO₄ and functions as a positive electrode active material.

In the general formula, A represents at least one element selected from the group consisting of Co, Mn, Ni, Fe, Cu, and Cr, D represents at least one element selected from the group consisting of Mg, Ca, Sr, Ba, Ti, Zn, V, B, Al, Ga, In, Si, Ge, Sc, and Y, and 0.9 < x < 1.1, 0 < y ≤ 1.0, 0 ≤ z <1.0, and 0.9 < y + z < 1.1 are satisfied.

In the general formula, A and D may be each independently two or more elements. The olivine-type phosphate-based compound that is used in the present embodiment may be represented by, for example, Formula LiₓA¹_{y1}A²_{y2}D¹_{z1}D²_{z2}D³_{z3}D⁴_{z4}PO₄. In this case, the sum of y₁ and y₂ needs to be in the range of y, that is, the range of more than 0 and 1.0 or less, and the sum of z₁, z₂, z₃, and z₄ needs to be in the range of z, that is, the range of 0 or more and less than 1.0.

The olivine-type phosphate-based compound is not particularly limited as long as the olivine-type phosphate-based compound has the above-described constitution, but is preferably made of an olivine-structured transition metal lithium phosphate compound.

In General Formula LiₓA_{y}D_{z}PO₄, A is preferably Co, Mn, Ni, or Fe and more preferably Co, Mn, or Fe. In addition, D is preferably Mg, Ca, Sr, Ba, Ti, Zn, V, or Al. Containing these elements in the olivine-type phosphate-based compound enables a positive electrode mixture layer to realize a high discharge potential and high safety. In addition, these elements have an abundant amount of resources and are thus preferred as materials to be selected.

The olivine-type phosphate-based compound is also preferably a compound represented by General Formula LiFeₓ₂Mn_{1-x2-y2}M_{y2}PO₄ from the viewpoint of a high discharge capacity and a high energy density.

In General Formula LiFeₓ₂Mn_{1-x2-y2}M_{y2}PO₄, M is at least one element selected from Mg, Ca, Co, Sr, Ba, Ti, Zn, V, B, Al, Ga, In, Si, Ge, Sc and Y, and 0.05 ≤ x2 ≤ 1.0 and 0 ≤ y2 ≤ 0.14 are satisfied.

The shape of the olivine-type phosphate-based compound in the present embodiment is preferably a primary particle and a secondary particle, which is an agglomerate of the primary particles.

The shape of the primary particle of the olivine-type phosphate-based compound is not particularly limited, but is preferably spherical, particularly, truly spherical. When the primary particle has a spherical shape, it is possible to decrease the amount of a solvent used at the time of preparing a paste for forming a positive electrode using the positive electrode material of the present embodiment, and it becomes easy to apply pastes for forming a positive electrode to current collectors. The paste for forming a positive electrode can be prepared by, for example, mixing the positive electrode material of the present embodiment, a binder resin (binder), and a solvent.

The primary particle and the secondary particle of the olivine-type phosphate-based compound will be collectively referred to as the positive electrode active material particle.

### Carbonaceous film

Carbon that the positive electrode material of the present embodiment contains is preferably contained in the positive electrode material as a carbonaceous film that coats the positive electrode active material particles.

The carbonaceous film is a pyrolytic carbonaceous film that is obtained by carbonizing an organic substance that serves as a raw material of the carbonaceous film.

Hereinafter, the positive electrode active material particles coated with the carbonaceous film will also be referred to as carbonaceous coated positive electrode active material particles.

The organic substance is not particularly limited as long as the organic substance is a compound capable of forming the carbonaceous film on the surfaces of the positive electrode active material particles, and examples thereof include polyvinyl alcohol (PVA), polyvinyl pyrrolidone, cellulose, starch, gelatin, carboxymethyl cellulose, methyl cellulose, hydroxymethyl cellulose, hydroxyethyl cellulose, polyacrylic acid, polystyrene sulfonate, polyacrylamide, polyvinyl acetate, phenol, phenolic resins, glucose, fructose, galactose, mannose, maltose, sucrose, lactose, glycogen, pectin, alginic acid, glucomannan, chitin, hyaluronic acid, chondroitin, agarose, polyether, polyvalent alcohol, and the like. Examples of the polyvalent alcohol include polyethylene glycol, polypropylene glycol, polyglycerin, glycerin, and the like. These organic substances may be used singly or two or more organic substances may be used in combination.

In the positive electrode material (preferably the carbonaceous coated positive electrode active material particles) in the present embodiment, the carbon amount (c) is preferably 0.7% by mass or more and 3.0% by mass or less.

When the carbon amount (c) of the positive electrode material is 0.7% by mass or more, since the distance between carbon atoms is shortened, and a conduction path is easily formed, the cycle characteristics of lithium ion secondary batteries are likely to improve. When the carbon amount (c) of the positive electrode material is 3.0% by mass or less, voids among the primary particles of the olivine-type phosphate-based compound do not easily become narrow, it is possible to increase the amount of electrolytes held in the positive electrode material, and the input characteristics are likely to improve.

From the viewpoint of the balance between the input characteristics and the cycle characteristics, the carbon amount (c) of the positive electrode material is more preferably 1.0% by mass or more and 2.7% by mass or less and still more preferably 1.2% by mass or more and 2.5% by mass or less.

The amount of carbon (the carbon content in the positive electrode material) can be measured using a carbon analyzer (for example, manufactured by Horiba, Ltd., Model No.: EMIA-220V).

In the positive electrode material (preferably the carbonaceous coated positive electrode active material particles) in the present embodiment, the specific surface area (a) is preferably 5 m²/g or more and 35 m²/g or less.

When the specific surface area (a) of the positive electrode material is 5 m²/g or more, the particle diameters of the primary particles of the olivine-type phosphate-based compound becomes small, and it is possible to increase the capacity during operation at a high current and operation at a low temperature by shortening the time taken for the migration of lithium ions and electrons. When the specific surface area (a) of the positive electrode material is 35 m²/g or less, it is possible to suppress the elution of metal.

From the viewpoint of the balance between the input characteristics and the cycle characteristics, the specific surface area (a) of the positive electrode material is more preferably 7 m²/g or more and 30 m²/g or less and still more preferably 9 m²/g or more and 25 m²/g or less.

The specific surface area can be measured by the BET method through nitrogen (N₂) adsorption using a specific surface area meter (for example, manufactured by Microtrac BEL Corp., trade name: BELSORP-mini).

In the positive electrode material (preferably the carbonaceous coated positive electrode active material particles) in the present embodiment, the value (c/a) obtained by dividing the carbon amount (c) by the specific surface area (a), in other words, the amount of carbon per unit specific surface area of the positive electrode material is preferably 0.08 or more and 0.20 or less. The unit of c/a is % by mass·g/m².

When c/a is 0.08 or more, the carbonaceous film is capable of exhibiting sufficient electron conductivity. In addition, when c/a is 0.20 or less, the number of fine crystals of graphite having a lamellar structure that is generated in the carbonaceous film becomes small, and the fine crystals of graphite are less likely to build a steric barrier during the diffusion of lithium ions in the carbonaceous film. Therefore, it is possible to suppress an increase in the lithium ion migration resistance.

From the above-described viewpoint, c/a is more preferably 0.10 or more and 0.18 or less and still more preferably 0.11 or more and 0.16 or less.

The tap density of the positive electrode material (preferably the carbonaceous coated positive electrode active material particles) in the present embodiment is preferably 1.61 g/cm³ or more and 1.86 g/cm³ or less.

When the tap density of the positive electrode material is 1.61 g/cm³ or more, the contact area between the positive electrode active material and an electrolyte does not become too large, and it is possible to suppress the amount of metal eluted from the positive electrode active material. When the tap density of the positive electrode material is 1.86 g/cm³ or less, the contact area between the positive electrode active material and the electrolyte becomes large, the intercalation and deintercalation of lithium ions into and from the positive electrode active material become easy, and it is possible to increase the capacity.

From the above viewpoint, the tap density of the positive electrode material is more preferably 1.64 g/cm³ or more and 1.80 g/cm³ or less and still more preferably 1.65 g/cm³ or more and 1.79 g/cm³ or less.

The tap density can be measured by a method according to test methods for bulk density of fine ceramic powder of JIS R 1628:1997.

The lower limit value of the average particle diameter of the primary particles of the positive electrode active material particles coated with the carbonaceous film (carbonaceous coated positive electrode active material particles) is preferably 50 nm or more, more preferably 70 nm or more, and still more preferably 100 nm or more. The upper limit value of the average particle diameter of the primary particles of the positive electrode active material particles coated with the carbonaceous film (carbonaceous coated positive electrode active material particles) is preferably 500 nm or less, more preferably 450 nm or less, and still more preferably 400 nm or less.

When the average particle diameter of the primary particles is 50 nm or more, it is possible to suppress an increase in the amount of carbon attributed to an increase in the specific surface area of the positive electrode material, and thus it is possible to suppress a decrease in the charge and discharge capacity of lithium ion secondary batteries. When the average particle diameter of the primary particles is 500 nm or less, it is possible to shorten the migration time of lithium ions or the migration time of electrons, which migrate in the positive electrode material. Therefore, it is possible to suppress the deterioration of the output characteristics attributed to an increase in the internal resistance of lithium ion secondary batteries.

Here, the average particle diameter of the primary particles refers to the number-average particle diameter. The average particle diameter of the primary particles can be obtained by number-averaging the particle diameters of 200 or more particles measured by scanning electron microscopic (SEM) observation.

The lower limit value of the average particle diameter of the secondary particles of the carbonaceous coated positive electrode active material particles is preferably 0.5 µm or more, more preferably 1.0 µm or more, and still more preferably 1.5 µm or more. The upper limit value of the average particle diameter of the secondary particles of the carbonaceous coated positive electrode active material particles is preferably 20 µm or less, more preferably 18 µm or less, and still more preferably 15 µm or less.

When the average particle diameter of the secondary particles is 0.5 µm or more, it is possible to suppress the necessity of a large amount of a conductive auxiliary agent and a binder at the time of preparing a positive electrode material paste for a lithium ion secondary battery by mixing the positive electrode material, the conductive auxiliary agent, a binder resin (binder), and a solvent. Therefore, it is possible to increase the battery capacity of lithium ion secondary batteries per unit mass in the positive electrode mixture layer of the positive electrode of the lithium ion secondary batteries. When the average particle diameter of the secondary particles is 20 µm or less, it is possible to enhance the dispersibility and uniformity of the conductive auxiliary agent or the binder in the positive electrode mixture layer of the positive electrode of lithium ion secondary batteries. As a result, the discharge capacity in the high-speed charge and discharge of the lithium ion secondary batteries increases.

Here, the average particle diameter of the secondary particles refers to the volume-average particle diameter. The average particle diameter of the secondary particles can be measured using a laser diffraction and scattering particle size distribution measurement instrument or the like.

The lower limit value of the thickness (average value) of the carbonaceous film that coats the positive electrode active material particles is preferably 1.0 nm or more and more preferably 1.4 nm or more. The upper limit value of the thickness (average value) of the carbonaceous film that coats the positive electrode active material particles is preferably 10.0 nm or less and more preferably 7.0 nm or less.

When the thickness of the carbonaceous film is 1.0 nm or more, it is possible to suppress an increase in the sum of the migration resistances of electrons in the carbonaceous film. Therefore, it is possible to suppress an increase in the internal resistance of lithium ion secondary batteries and to prevent voltage drop at a high charge-discharge rate. When the thickness of the carbonaceous film is 10.0 nm or less, it is possible to suppress the formation of steric barrier that hinders the diffusion of lithium Ions in the carbonaceous film. Therefore, the migration resistance of lithium ions becomes low. As a result, an increase in the internal resistance of the lithium ion secondary battery is suppressed, and it is possible to prevent voltage drop at a high charge-discharge rate.

The coating ratio of the carbonaceous film to the positive electrode active material particles is preferably 60% or more and more preferably 80% or more. When the coating ratio of the carbonaceous film is 60% or more, the coating effect of the carbonaceous film can be sufficiently obtained.

The coating ratio of the carbonaceous film can be obtained by observing the particles using a transmission electron microscope (TEM), an energy dispersive X-ray microanalyzer (EDX), or the like, calculating the proportions of parts that cover the particle surfaces, and obtaining the average value thereof.

The lower limit value of the density of the carbonaceous film, which is calculated using the carbon component constituting the carbonaceous film, is preferably 0.3 g/cm³ or more and more preferably 0.4 g/cm³ or more. The upper limit value of the density of the carbonaceous film is preferably 2.0 g/cm³ or less and more preferably 1.8 g/cm³ or less. The density of the carbonaceous film, which is calculated using the carbon component constituting the carbonaceous film, refers to the mass of the carbonaceous film per unit volume in a case where the carbonaceous film is formed of carbon alone.

When the density of the carbonaceous film is 0.3 g/cm³ or more, the carbonaceous film is capable of exhibiting a sufficient electron conductivity. When the density of the carbonaceous film is 2.0 g/cm³ or less, since the amount of the fine crystals of graphite having a lamellar structure in the carbonaceous film is small, the fine crystals of graphite do not generate any steric barrier during the diffusion of lithium ions in the carbonaceous film. Therefore, the lithium ion migration resistance does not increase. As a result, the internal resistance of lithium ion secondary batteries does not increase, and voltage drop at a high charge-discharge rate of lithium ion secondary batteries does not occur.

### Method for manufacturing positive electrode material for lithium ion secondary battery

A method for manufacturing a positive electrode material for a lithium ion secondary battery of the present embodiment is not particularly limited and has, for example, a step of mixing organic compounds that serve as an A source, a D source, a P source, and a carbon source, a step of temporarily calcinating a mixture obtained in the above-described step, a step of mixing a temporarily calcinated body obtained by the temporary calcination, a Li source, and a solvent such as water and dispersing a mixture by a wet milling treatment, a step of drying and granulating a slurry obtained by the wet milling step, and a step of mainly calcinating a granulated body obtained by the drying and granulating step.

The molar ratio (Li:A:D:P) among the Li source, the A source, the D source, and the P source is preferably 2.5 to 4.0:0 to 1.0:0 to 1.0:0.9 to 1.15 and more preferably 2.8 to 3.5:0 to 1.0:0 to 1.0:0.95 to 1.1.

Here, as the Li source, for example, at least one element selected from the group consisting of hydroxides such as lithium hydroxide (LiOH) and the like; inorganic lithium acid salts such as lithium carbonate (Li₂CO₃), lithium chloride (LiCl), lithium nitrate (LiNO₃), lithium phosphate (Li₃PO₄), lithium hydrogen phosphate (Li₂HPO₄), lithium dihydrogen phosphate (LiH₂PO₄), and the like; organic lithium acid salts such as lithium acetate (LiCH₃COO), lithium oxalate ((COOLi)₂), and the like, and hydrates thereof is preferably used.

Lithium phosphate (Li₃PO₄) can be used as both the Li source and the P source.

Examples of the A source include chlorides, carboxylates, hydrosulfates, and the like that include at least one element selected from the group consisting of Co, Mn, Ni, Fe, Cu, and Cr. For example, in a case where A in Liₓ₁A_{y1}D_{z1}PO₄ is Fe, examples of the Fe source include iron compounds such as iron (II) chloride (FeCl₂), iron (II) sulfate (FeSO₄), iron (II) acetate (Fe(CH₃COO)₂), and the like and hydrates thereof, trivalent iron compounds such as iron (III) nitrate (Fe(NO₃)₃), iron (III) chloride (FeCl₃), iron (III) citrate (FeC₆H₅O₇), and the like, ferric orthophosphate, and the like.

Examples of the D source include chlorides, carboxylates, hydrosulfates, and the like that include at least one element selected from the group consisting of Mg, Ca, Sr, Ba, Ti, Zn, B, Al, Ga, In, Si, Ge, Sc, and Y. For example, in a case where D in Liₓ₁A_{y1}D_{z1}PO₄ is Ca, examples of the Ca source include calcium (II) hydroxide (Ca(OH)₂), calcium (II) chloride (CaCl₂), calcium (II) sulfate (CaSO₄), calcium (II) nitrate (Ca(NO₃)₂), calcium (II) acetate (Ca(CH₃COO)₂), hydrates thereof, and the like.

Examples of the P source include phosphoric acid compounds such as phosphoric acid (H₃PO₄), ammonium dihydrogen phosphate (NH₄H₂PO₄), diammonium hydrogen phosphate ((NH₄)₂HPO₄), ferric orthophosphate, and the like.

The amount of the organic compound, which serves as the carbon source, blended is preferably 0.15 parts by mass or more and 15 parts by mass or less and more preferably 0.45 parts by mass or more and 4.5 parts by mass or less with respect to 100 parts by mass of the LiₓA_{y}D_{z}PO₄ positive electrode active material particles when the total mass of the organic compounds is converted to a carbon element.

When the amount of the organic compound blended into the positive electrode active material particles is 0.15 parts by mass or more, it is possible to set the coating ratio of the carbonaceous film that is generated by a thermal treatment of the organic compound to the surfaces of the positive electrode active material particles to 80% or more. Therefore, it is possible to improve the high input characteristic and the cycle characteristic of lithium ion secondary batteries. When the amount of the organic compound blended into the positive electrode active material particles is 15 parts by mass or less, it is possible to suppress a decrease in the capacity of lithium ion secondary batteries caused by a relative decrease in the blending ratio of the positive electrode active material particles. In addition, when the amount of the organic compound blended into the positive electrode active material particles is 15 parts by mass or less, it is possible to suppress an increase in the bulk density of the positive electrode active material particles caused by the excessive support of the carbonaceous film by the positive electrode active material particles. When an increase in the bulk density of the positive electrode active material particles is suppressed, it is possible to suppress a decrease in the electrode density and to suppress a decrease in the capacity of lithium ion secondary batteries per unit volume.

The temporary calcination temperature is preferably 350°C or higher and 500°C or lower and more preferably 380°C or higher and 450°C or lower.

When the temporary calcination temperature is 350°C or higher, it is possible to generate particles in which the A source, the D source, and the P source have been sufficiently reacted with each other and to sufficiently proceed the decomposition and reaction of the organic compounds. As a result, it is possible to form a temporarily calcinated body in which a carbonaceous film is formed around a particle in which the A source, the D source, and the P source are present in a uniform concentration distribution. When the temporary calcination temperature is 500°C or lower, grain growth in the temporarily calcinated body does not proceed, there are no coarse particle diameters, and small particle diameters can be maintained. As a result, the dispersed particle diameters in the subsequent wet milling treatment are suppressed to be small, in a positive electrode active material to be finally obtained, there are no coarse particle diameters, and small particle diameters can be maintained, and it is possible to obtain particles having high specific surface areas. Therefore, in the case of forming lithium ion secondary batteries, the discharge capacity at a high charge-discharge rate becomes large, and sufficient charge and discharge rate performance can be realized.

The temporary calcination time needs to be long enough for the organic compounds to be sufficiently carbonized, is not particularly limited, and is, for example, 0.1 hours or longer and 100 hours or shorter.

The calcination atmosphere is preferably an inert atmosphere filled with an inert gas such as nitrogen (N₂), argon (Ar), or the like or a reducing atmosphere containing a reducing gas such as hydrogen (H₂) or the like.

At the time of mixing the temporarily calcinated body and the Li source with the solvent, an adjustment is made such that the solid content preferably reaches 40% by mass or more and 75% by mass or less, more preferably reaches 45% by mass or more and 72% by mass or less, and still more preferably reaches 50% by mass or more and 70% by mass or less with respect to the total amount (100% by mass) of the temporarily calcinated body, the Li source, and the solvent. When the solid content is set within the above-described range, it is possible to set the tap density of a positive electrode material to be obtained within the above-described range.

Examples of the solvent include water; alcohols such as methanol, ethanol, 1-propanol, 2-propanol (isopropyl alcohol:IPA), butanol, pentanol, hexanol, octanol, diacetone alcohol, and the like; esters such as ethyl acetate, butyl acetate, ethyl lactate, propylene glycol monomethyl ether acetate, propylene glycol monoethyl ether acetate, γ-butyrolactone, and the like; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, diethylene glycol monoethyl ether, and the like; ketones such as acetone, methyl ethyl ketone (MEK), methyl isobutyl ketone (MIBK), acetyl acetone, cyclohexanone, and the like; amides such as dimethyl formamide, N,N-dimethylacetoacetamide, N-methyl pyrrolidone, and the like; glycols such as ethylene glycol, diethylene glycol, propylene glycol, and the like, and the like. These solvents may be used singly or two or more solvents may be mixed and used. Among these solvents, a preferred solvent is water.

A dispersant may be added thereto as necessary.

The method for dispersing the temporarily calcinated body and the Li source in the solvent is not particularly limited as long as the temporarily calcinated body and the Li source are dissolved or dispersed by the method. Examples of a device that is used for the above-described dispersion include medium stirring-type dispersion devices that stir medium particles at a high rate such as a planetary ball mill, an oscillation ball mill, a bead mill, a paint shaker, an attritor, and the like.

The step of drying and granulating the slurry obtained by the wet milling step is not particularly limited, and a granulated body of the mixture may be generated by, for example, spraying the mixture in a high-temperature atmosphere, for example, in the atmosphere at 110°C or higher and 200°C or lower using a spray pyrolysis apparatus and drying the mixture.

In this spray pyrolysis method, in order to generate a substantially spherical granulated body by rapidly drying the mixture, the particle diameters of liquid droplets during the spraying are preferably 0.01 µm or more and 100 µm or less.

The main calcination temperature (a temperature at which the slurry is dried) is preferably 630°C or higher and 790°C or lower and more preferably 680°C or higher and 770°C or lower.

When the calcination temperature is 630°C or higher, the reaction between the temporarily calcinated body and the Li source proceeds sufficiently, not only can a positive electrode material having favorable crystallinity be obtained, but the organic compound-derived carbon that is present around the particles of the positive electrode material can be sufficiently carbonized. As a result, it is possible to form a low-resistance carbonaceous film on the obtained positive electrode material. When the calcination temperature is 790°C or lower, grain growth in the positive electrode material does not proceed, and it is possible to maintain a sufficiently large specific surface area. As a result, in the case of forming lithium ion secondary batteries, the discharge capacity at a high charge-discharge rate becomes large, and sufficient charge and discharge rate performance can be realized.

The calcination time needs to be long enough for the organic compounds to be sufficiently carbonized, is not particularly limited, and is, for example, 0.1 hours or longer and 100 hours or shorter.

The calcination atmosphere is preferably an inert atmosphere filled with an inert gas such as nitrogen (N₂), argon (Ar), or the like or a reducing atmosphere containing a reducing gas such as hydrogen (H₂) or the like. In a case where it is necessary to further suppress the oxidation of the mixture, the calcination atmosphere is more preferably a reducing atmosphere.

The temporary calcination makes the organic compounds decomposed and reacted to generate carbon. In addition, this carbon is attached to the surfaces of the positive electrode active material particles and serves as the carbonaceous film, and the carbonization of the carbon proceeds by the main calcination. Therefore, the surfaces of the positive electrode active material particles are covered with low-resistance carbonaceous films.

According to the positive electrode material for a lithium ion secondary battery of the present embodiment, the olivine-type phosphate-based compound represented by General Formula LiₓA_{y}D_{z}PO₄ and carbon are contained, the primary particles of the olivine-type phosphate-based compound agglomerate to form the agglomerates, and the agglomerate is a dense agglomerate that has a volume density of 70% by volume or more and 85% by volume or less in the case of being made solid. Therefore, it is possible to obtain a lithium ion secondary battery being excellent in terms of the energy density per unit volume and the charge and discharge capacity.

### Positive electrode for lithium ion secondary battery

A positive electrode for a lithium ion secondary battery of the present embodiment includes an electrode current collector and a positive electrode mixture layer formed on the electrode current collector, and the positive electrode mixture layer contains the positive electrode material of the present embodiment.

Since the positive electrode for a lithium ion secondary battery of the present embodiment contains the positive electrode material for a lithium ion secondary battery of the present embodiment, a lithium ion secondary battery for which the positive electrode for a lithium ion secondary battery of the present embodiment is used is excellent in terms of the high input characteristics and the cycle characteristics.

Hereinafter, the positive electrode for a lithium ion secondary battery will be simply referred to as "positive electrode" in some cases.

In order to produce the positive electrode, the positive electrode material, a binder made of a binder resin, and a solvent are mixed together, thereby preparing a coating material for forming the positive electrode or a paste for forming the positive electrode. At this time, a conductive auxiliary agent such as carbon black, acetylene black, graphite, ketjen black, natural graphite, artificial graphite, or the like may be added thereto as necessary.

As the binder, that is, the binder resin, for example, a polytetrafluoroethylene (PTFE) resin, a polyvinylidene fluoride (PVdF) resin, fluorine rubber, or the like is preferably used.

The blending ratio between the positive electrode material and the binder resin is not particularly limited. However, for example, the amount of the binder resin is preferably 1 part by mass or more and 30 parts by mass or less and more preferably 3 parts by mass or more and 20 parts by mass or less with respect to 100 parts by mass of the positive electrode material.

The solvent that is used for the coating material for forming the positive electrode or the paste for forming the positive electrode may be appropriately selected in accordance with properties of the binder resin. Examples of the solvent include water; alcohols such as methanol, ethanol, 1-propanol, 2-propanol (isopropyl alcohol:IPA), butanol, pentanol, hexanol, octanol, diacetone alcohol, and the like; esters such as ethyl acetate, butyl acetate, ethyl lactate, propylene glycol monomethyl ether acetate, propylene glycol monoethyl ether acetate, γ-butyrolactone, and the like, ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, diethylene glycol monoethyl ether, and the like, ketones such as acetone, methyl ethyl ketone (MEK), methyl isobutyl ketone (MIBK), acetylacetone, cyclohexanone, and the like, amides such as dimethyl formamide, N,N-dimethylacetoacetamide, N-methylpyrrolidone, and the like, glycols such as ethylene glycol, diethylene glycol, propylene glycol, and the like, and the like. These solvents may be used singly or two or more solvents may be used in combination.

Next, the coating material for forming the positive electrode or the paste for forming the positive electrode is applied to one main surface of the electrode current collector to form a coated film. Next, this coated film is dried to obtain an electrode current collector having the coated film formed on one main surface. The coated film is made of the mixture containing the positive electrode material and the binder. After that, the coated film is pressurized, bonded by pressure, and dried to produce a positive electrode having a positive electrode mixture layer on one main surface of the electrode current collector.

More specifically, for example, the coating material for forming the positive electrode or the paste for forming the positive electrode is applied to one surface of an aluminum foil as the electrode current collector to form a coated film. Next, the coated film is dried to obtain an aluminum foil having the coated film formed on one surface. The coated film is made of the mixture containing the positive electrode material and the binder. Next, the coated film is pressurized, bonded by pressure, and dried, thereby producing an electrode current collector (positive electrode) having a positive electrode mixture layer on one surface of the aluminum foil.

A positive electrode with which a lithium ion secondary battery having excellent high input characteristics and excellent cycle characteristics can be obtained can be produced in the above-described manner.

The positive electrode for a lithium ion secondary battery of the present embodiment includes the electrode current collector and the positive electrode mixture layer formed on the electrode current collector, and the positive electrode mixture layer contains the positive electrode material for a lithium ion secondary battery of the present embodiment. Therefore, it is possible to obtain a lithium ion secondary battery being excellent in terms of the energy density per unit volume and the charge and discharge capacity.

### Lithium ion secondary battery

A lithium ion secondary battery of the present embodiment has a positive electrode, a negative electrode, and an electrolyte and includes the positive electrode for a lithium ion secondary battery of the present embodiment as the positive electrode.

The lithium ion secondary battery of the present embodiment is not limited to the above-described constitution and may further include, for example, a separator.

### Negative electrode

Examples of the negative electrode include negative electrodes including a negative electrode material such as metallic Li, a carbon material such as natural graphite, hard carbon, or the like, a Li alloy, Li₄Ti₅O₁₂, Si(Li_{4.4}Si), or the like.

### Electrolyte

The electrolyte is not particularly limited, but is preferably a non-aqueous electrolyte. Examples of the non-aqueous electrolyte include electrolytes obtained by mixing ethylene carbonate (EC) and ethyl methyl carbonate (EMC) such that the volume ratio reaches 1:1 and dissolving lithium hexafluorophosphate (LiPF₆) in the obtained solvent mixture such that the concentration reaches 1 mol/dm³.

### Separator

In the lithium ion secondary battery of the present embodiment, the positive electrode and the negative electrode can be made to face each other through a separator. As the separator, it is possible to use, for example, porous propylene.

In addition, instead of the non-aqueous electrolyte and the separator, a solid electrolyte may be used.

The lithium ion secondary battery of the present embodiment has the positive electrode, the negative electrode, and the electrolyte and includes the positive electrode for a lithium ion secondary battery of the present embodiment as the positive electrode, and is thus excellent in terms of the energy density per unit volume and the charge and discharge capacity.

In the lithium ion secondary battery of the present embodiment, the positive electrode has the positive electrode mixture layer formed using the positive electrode material for a lithium ion secondary battery of the present embodiment, Li ion migration is excellent in the periphery of any battery constituent member, and the high input characteristics and the cycle characteristics are excellent. Therefore, the lithium ion secondary battery is preferably used in batteries for driving electric vehicles, batteries for driving hybrid vehicles, and the like.

### EXAMPLES

Hereinafter, the present invention will be specifically described using examples and comparative examples. It should be noted that the present invention is not limited to forms described in the examples.

### Manufacturing of positive electrode materials for lithium ion secondary battery

### Example 1

An olivine-type compound LiFePO₄ was manufactured as described below.

FePO₄ was used as an Fe source and a P source, glucose was used as a carbon source, and these were mixed with a Henschel mixer for six hours to prepare a raw material mixture. At this time, the mixing ratio between the Fe source and the P source was set to Fe:P = 1:1 in terms of the molar ratio, and glucose was added such that the amount of glucose added reached 7 parts by mass with respect to 100 parts by mass of LiFePO₄, which was the final product.

Next, as temporary calcination, the raw material mixture was thermally treated at 400°C for five hours using a rotary kiln manufactured by Chugai Engineering Co., Ltd. to obtain a temporarily calcinated body.

This temporarily calcinated body, LiOH·H₂O as a Li source, and a mixed solvent of water and ethylene glycol were mixed together such that the solid content reached 60% by mass with respect to the total amount (100% by mass) of the temporarily calcinated body, LiOH·H₂O, and the mixed solvent. This solid content is the same amount in a slurry to be described below. At this time, the amount of the Li source to be added was set so that the mixing ratio among the Li source, the Fe source, and the P source reached Li:Fe:P = 1:1:1 in terms of the molar ratio. In addition, the mixing ratio between water and ethylene glycol was set so that the amount of ethylene glycol reached 1 part by mass with respect to 100 parts by mass of water.

A wet dispersion treatment was carried out on this mixture using a bead mill TSG-6U manufactured by AIMEX Co., Ltd. and zirconia beads having a diameter of 1 mm to obtain a slurry. The wet dispersion treatment was carried out until the average particle size distribution of the slurry reached 0.5 µm or less.

After the slurry obtained as described above was dried and granulated, a thermal treatment was carried out at 690°C for two hours using the rotary kiln manufactured by Chugai Engineering Co., Ltd. A reaction by this heating treatment generated LiFePO₄ and coated the surfaces of LiFePO₄ particles with carbonaceous films to obtain a positive electrode material for a lithium ion secondary battery of Example 1.

### Example 2

A positive electrode material for a lithium ion secondary battery of Example 2 was obtained in the same manner as in Example 1 except that the temporarily calcinated body obtained in Example 1, LiOH·H₂O as the Li source, and the mixed solvent were mixed together such that the solid content reached 50% by mass with respect to the total amount (100% by mass) of the temporarily calcinated body, LiOH·H₂O, and the mixed solvent.

### Example 3

A positive electrode material for a lithium ion secondary battery of Example 3 was obtained in the same manner as in Example 1 except that the temporarily calcinated body obtained in Example 1, LiOH·H₂O as the Li source, and the mixed solvent were mixed together such that the solid content reached 70% by mass with respect to the total amount (100% by mass) of the temporarily calcinated body, LiOH·H₂O, and the mixed solvent.

### Comparative Example 1

A positive electrode material for a lithium ion secondary battery of Comparative Example 1 was obtained in the same manner as in Example 1 except that the temporarily calcinated body obtained in Example 1, LiOH·H₂O as the Li source, and the mixed solvent were mixed together such that the solid content reached 30% by mass with respect to the total amount (100% by mass) of the temporarily calcinated body, LiOH·H₂O, and the mixed solvent.

### Comparative Example 2

A positive electrode material for a lithium ion secondary battery of Comparative Example 2 was obtained in the same manner as in Example 1 except that the temporarily calcinated body obtained in Example 1, LiOH·H₂O as the Li source, and water as a solvent were mixed together such that the solid content reached 30% by mass with respect to the total amount (100% by mass) of the temporarily calcinated body, LiOH·H₂O, and the mixed solvent.

### Comparative Example 3

A positive electrode material for a lithium ion secondary battery of Comparative Example 3 was obtained in the same manner as in Example 1 except that the temporarily calcinated body obtained in Example 1, LiOH·H₂O as the Li source, and the mixed solvent were mixed together such that the solid content reached 85% by mass with respect to the total amount (100% by mass) of the temporarily calcinated body, LiOH·H₂O, and the mixed solvent, and the mixing ratio between water and ethylene glycol was set such that the amount of ethylene glycol reached 5 parts by mass with respect to 100 parts by mass of water.

### Evaluation

On the positive electrode materials obtained in Example 1 to Example 3 and Comparative Example 1 to Comparative Example 3, the following evaluation was carried out. In addition, lithium ion secondary batteries were produced using the positive electrode materials of Example 1 to Example 3 and Comparative Example 1 to Comparative Example 3, and the following evaluation was carried out on the lithium ion secondary batteries. The results are shown in Table 1.

### Production of lithium ion secondary batteries

The positive electrode material, acetylene black (AB) as a conductive auxiliary agent, and polyvinylidene fluoride (PVdF) as a binder were added to N-methyl-2-pyrrolidinone (NMP), which was a solvent, such that the mass ratio in a paste reached 90:5:5 (positive electrode material:AB:PVdF) and mixed together, thereby preparing a positive electrode material paste.

Next, this positive electrode material paste was applied to the surface of a 30 µm-thick aluminum foil (electrode current collector) to form a coated film, the coated film was dried and bonded by pressure such that the coated film had a predetermined density to form a positive electrode mixture layer on the surface of the aluminum foil, and a positive electrode plate having the aluminum foil and the positive electrode mixture layer was obtained.

A plate-like square piece having a positive electrode area of 9 cm² and a room for a tab around the piece was obtained from the obtained positive electrode plate by blanking using a molding machine. The thickness and mass of the positive electrode mixture layer per positive electrode plate were measured to calculate the electrode density (the density of the positive electrode mixture layer plate).

After that, a tab was welded to the room for a tab to produce a test electrode (positive electrode).

Next, natural graphite as a negative electrode active material, styrene-butadiene latex (SBR) as a binder, and carboxymethyl cellulose (CMC) as a viscosity-adjusting material were added to pure water as a solvent so that the mass ratio in a paste reached 98:1:1 (natural graphite:SBR:CMC), and these components were mixed together, thereby preparing a negative electrode material paste (for a negative electrode).

The prepared negative electrode material paste (for the negative electrode) was applied to the surface of a 10 µm-thick copper foil (current collector) to form a coated film, the coated film was dried, and a negative electrode mixture layer was formed on the surface of the copper foil, thereby obtaining a negative electrode plate having the copper foil and the negative electrode mixture layer.

After that, a plate-like square piece having a negative electrode area of 9 cm² and a room for a tab around the piece was obtained from the negative electrode plate by blanking using a molding machine. Furthermore, a tab was welded to the room for a tab to produce a negative electrode.

The prepared positive electrode and negative electrode were made to face each other through a 25 µm-thick porous polypropylene separator, immersed in a 1 mol/L lithium hexafluorophosphate (LiPF₆) solution (10 mL) as a non-aqueous electrolyte (non-aqueous electrolytic solution), and then sealed with a laminate film, thereby producing a lithium ion secondary battery. As the LiPF₆ solution, a solution obtained by mixing ethylene carbonate and diethyl carbonate so that the volume ratio reached 1:1 and adding 2% by mass of vinylene carbonate thereto as an additive was used.

### Evaluation of positive electrode materials for lithium ion secondary battery

### (1) Volume density

The volume density of agglomerates formed by the agglomeration of the primary particles of LiFePO₄ was measured using a mercury porosimeter (Quantachrome Instruments, Model No.: Poremaster GT-60).

### (2) Carbon amount (c)

The carbon amount (c) of the positive electrode material was measured using a carbon analyzer (manufactured by Horiba, Ltd., model number: EMIA-220V).

### (3) Specific surface area (a)

The specific surface area (a) of the positive electrode material was measured by a BET method through nitrogen (N₂) adsorption using a specific surface area meter (manufactured by Microtrac BEL Corp., trade name: BELSORP-mini).

The amount of carbon/the specific surface area (c/a) was calculated from the measured carbon amount (c) and the measured specific surface area (a).

### (4) Particle size distribution (D50)

The particle size distribution (D50) of the positive electrode material was measured using a laser diffraction/scattering-type particle size distribution measurement instrument (manufactured by Horiba, Ltd., trade name: LA-950).

### (5) Tap density

A sample having a predetermined mass was collected from agglomerated particles of the positive electrode material, and this sample was put into a glass graduated cylinder having a volume of 10 mL. This sample was vibrated together with the graduated cylinder, the volume of the sample was measured when the volume of the sample stopped changing, and a value obtained by dividing the mass of the sample by the volume of the sample was regarded as the tap density of the positive electrode material.

### (6) Observation of cross section of granule

A thin film sample in which the cross section of a secondary particle of carbonaceous coated positive electrode active material particles was processed was produced using a focused ion beam processing observation device (manufactured by Hitachi High-Tech Corporation., trade name: FB2100), a thin film sample in which the cross section of a secondary particle of an olivine-type phosphate-based compound was processed using a field emission transmission electron microscope (manufactured by Hitachi High-Tech Corporation., trade name: HF2000) was produced, and voids among the primary particles were observed.

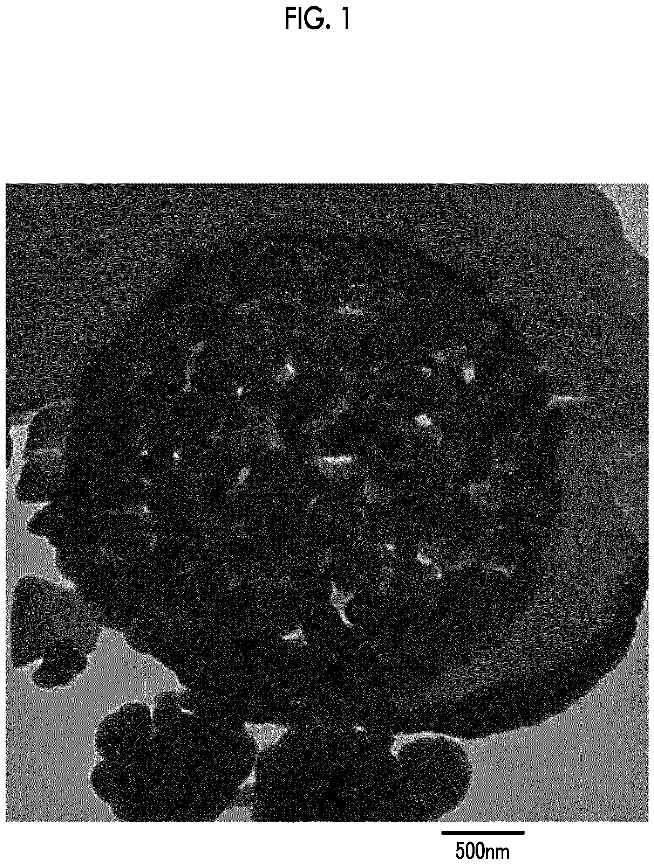

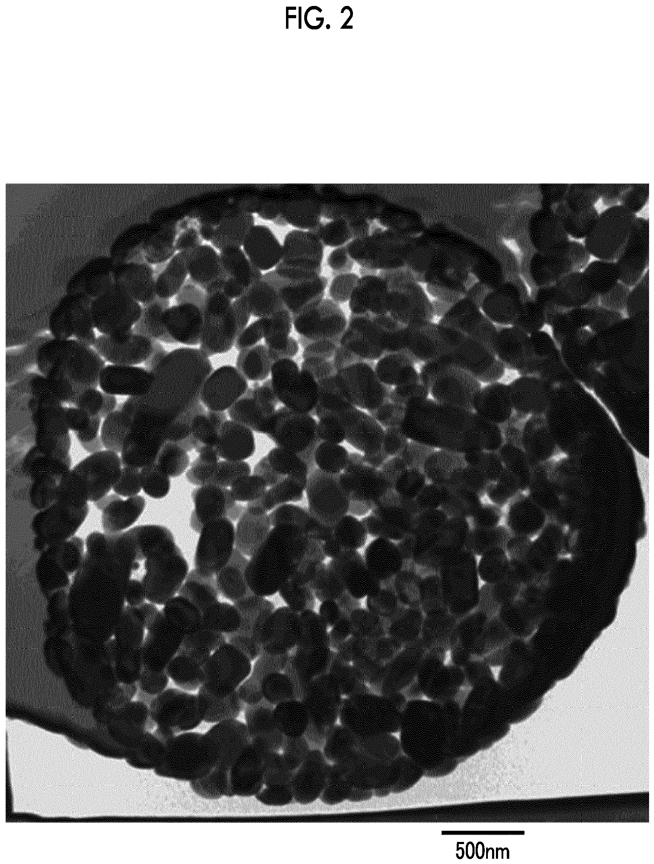

FIG. 1 shows a transmission electron microscope (TEM) image of the positive electrode material for a lithium ion secondary battery in Example 1, and FIG. 2 shows a TEM image of the positive electrode material for a lithium ion secondary battery in Comparative Example 1.

### Evaluation of lithium ion secondary batteries

### (1) 1C discharge capacity and energy density per unit volume per positive electrode

At an ambient temperature of 25°C, constant current charging was carried out with an electric current value of 1CA until the voltage of the positive electrode reached 4.1 V with respect to the voltage of the natural graphite negative electrode, then, constant current discharging was carried out with an electric current value of 1CA until the voltage of the positive electrode reached 2.5 V with respect to the voltage of the natural graphite negative electrode, and the 1C discharge capacity was evaluated. In addition, the energy density per unit volume was evaluated from the constant current discharging behaviors and the electrode density at an electric current value of 1CA.

The energy density per unit volume was evaluated according to the following standards.
"O": The energy density per unit volume at 1CA is 1260 mWh/cm³ or more.
"X": The energy density per unit volume at 1CA is less than 1260 mWh/cm³.

**[Table 1]**

| | Volume density of agglomerates [% by volume] | Carbon amount (c) [% by mass] | Specific surface area (a) [m²/g] | c/a | Tap density [g/cm³] | Electrode density [g/cm³] | 1C discharge capacity [mAh/g] | Energy density per volume |
|---|---|---|---|---|---|---|---|---|
| Example 1 | 76 | 1.35 | 10.8 | 0.125 | 1.72 | 2.41 | 161 | ○ |
| Example 2 | 73 | 1.32 | 11.0 | 0.120 | 1.65 | 2.39 | 161 | ○ |
| Example 3 | 82 | 1.30 | 10.4 | 0.125 | 1.79 | 2.41 | 158 | ○ |
| Comparative example 1 | 57 | 1.26 | 11.2 | 0.113 | 1.46 | 2.04 | 163 | × |
| Comparative example 2 | 66 | 1.33 | 10.6 | 0.125 | 1.54 | 2.24 | 161 | × |
| Comparative example 3 | 87 | 1.37 | 10.1 | 0.136 | 1.88 | 2.43 | 141 | × |

From the results shown in Table 1, since the volume densities of the agglomerates in the positive electrode materials for a lithium ion secondary battery of Example 1 to Example 3 are 70% by volume or more and 85% by volume or less, it is possible to improve the electrolyte mobility (also referred to as iontophoresis properties) in the agglomerates while maintaining an increased electrode density, and thus it is possible to increase the 1C discharge capacity and to increase the energy density per unit volume. In addition, for the lithium ion secondary batteries for which the positive electrode materials for a lithium ion secondary battery of Example 1 to Example 3 were used, respectively, the energy densities per unit volume were evaluated as "O".

On the other hand, since the volume densities of the agglomerates in the positive electrode materials for a lithium ion secondary battery of Comparative Example 1 and Comparative Example 2 are less than 70% by volume, the electrode densities become low, and, in spite of the fact that the electrolyte mobility (also referred to as iontophoresis properties) in the agglomerates is favorable and the 1C discharge capacity is high, the energy densities per unit volume decrease. Furthermore, since the volume density of the agglomerates in the positive electrode material for a lithium ion secondary battery of Comparative Example 3 exceeds 85% by volume, the electrolyte mobility (also referred to as iontophoresis properties) in the agglomerates becomes poor, and the 1C discharge capacity becomes low, and thus the energy density per unit volume decreases. In addition, for the lithium ion secondary batteries for which the positive electrode materials for a lithium ion secondary battery of Comparative Example 1 to Comparative Example 3 were used, respectively, the energy densities per unit volume were evaluated as "X".

### Industrial Applicability

The positive electrode material for a lithium ion secondary battery of the present invention is useful as a positive electrode of a lithium ion secondary battery.

## Claims

1. A positive electrode material for a lithium ion secondary battery comprising:
an olivine-type phosphate-based compound represented by General Formula LiₓA_{y}D_{z}PO₄ (where A is at least one selected from the group consisting of Co, Mn, Ni, Fe, Cu, and Cr, D is at least one selected from the group consisting of Mg, Ca, Sr, Ba, Ti, Zn, V, B, Al, Ga, In, Si, Ge, Sc, and Y, 0.9 < x < 1.1, 0 < y ≤ 1.0, 0 ≤ z < 1.0, and 0.9 < y + z < 1.1); and
carbon,
wherein the positive electrode material includes an agglomerate wherein primary particles which consist of the olivine-type phosphate-based compound agglomerate, and
the agglomerate is a dense agglomerate, wherein
a volume density of the agglomerate is 70% by volume or more and 85% by volume or less of a volume density of a solid body which has the same external appearance as the agglomerate.

2. The positive electrode material for a lithium ion secondary battery according to claim 1,
wherein a carbon amount (c) thereof is 0.7% by mass or more and 3.0% by mass or less,
a specific surface area (a) thereof is 5 m²/g or more and 35 m²/g or less, and
a value (c/a) obtained by dividing the carbon amount (c) by the specific surface area (a) is 0.08 or more and 0.20 or less.

3. The positive electrode material for a lithium ion secondary battery according to claim 1,
wherein a tap density thereof is 1.61 g/cm³ or more and 1.86 g/cm³ or less.

4. A positive electrode for a lithium ion secondary battery comprising:
an electrode current collector; and
a positive electrode mixture layer formed on the electrode current collector,
wherein the positive electrode mixture layer contains the positive electrode material for a lithium ion secondary battery according to claim 1.

5. A lithium ion secondary battery comprising:
a positive electrode;
a negative electrode; and
a non-aqueous electrolyte,
wherein the positive electrode for a lithium ion secondary battery according to claim 4 is provided as the positive electrode.

6. The positive electrode material for a lithium ion secondary battery according to claim 1,
wherein the agglomerate is covered with a carbonaceous film which contains the carbon.

7. The positive electrode material for a lithium ion secondary battery according to claim 1,
wherein some or all of the primary particles are covered with a carbonaceous film which contains the carbon.
